# EUROPÄISCHE PATENTSCHRIFT

(11) **EP 0 717 929 B1**
(45) Veröffentlichungstag und Bekanntmachung des Hinweises auf die Patenterteilung: **26.09.2001**
(21) Anmeldenummer: 95119347.3
(22) Anmeldetag: 08.12.1995
(51) Int. Cl.: A01N 59/16, A01N 25/08

(54) **Verfahren sowie Wirkstoff zur Verhinderung von mikrobiellem Wachstum an Oberflächen sowie Masse zur Oberflächenbeschichtung oder -Veredelung**
Process and composition for the prevention of microbial growth on a surface; composition for surface coating and finishing
Procédé et composition pour la prévention de la croissance microbienne sur surfaces; compositions de revêtement et finissage de surfaces

(30) Priorität: 22.12.1994 DE 4445881
(43) Veröffentlichungstag der Anmeldung: 26.06.1996
(73) Patentinhaber: Gradl, Toni, Dr., 94371 Rattenberg (DE)
(72) Erfinder: Gradl, Toni, Dr., 94371 Rattenberg (DE)
(74) Vertreter: Graf, Helmut, Dipl.-Ing.

(56) Entgegenhaltungen:
- EP-A- 0 333 118
- EP-A- 0 427 858
- WO-A-93/23092
- WO-A-94/15463
- US-A- 2 066 271
- US-A- 4 115 130
- DATABASE WPI Section Ch, Week 9536 Derwent Publications Ltd., London, GB; Class D22, AN 95-272812 XP002022539 & JP-A-07 173 022 (ASAHI KASEI KOGYO KK) , 11.Juli 1995
- DATABASE WPI Section Ch, Week 8949 Derwent Publications Ltd., London, GB; Class A60, AN 89-359956 XP002022541 & JP-A-01 268 764 (ISHIHARA SANGYO KAISHA) , 26.Oktober 1989
- DATABASE WPI Section Ch, Week 9020 Derwent Publications Ltd., London, GB; Class D22, AN 90-151807 XP002022615 & JP-A-02 096 508 (TEIKOKU KAKO KK) , 9.April 1990

## Beschreibung

Die Erfindung bezieht sich auf ein Verfahren zur Verhinderung von mikrobiellem Anwuchs an einer Oberfläche gemäß Oberbegriff Patentanspruch 1 sowie auf eine Masse zur Obeflächenbehandlung oder -Veredelung entsprechend Oberbegriff Patentanspruch 6.

Die Verhinderung von mikrobiellem Aufwuchs an Oberflächen ist von größter technischer und wirtschaftlicher Bedeutung. So überziehen sich beispielsweise Schiffswände sowie andere Oberflächen, auch solche aus Beton und Metall, beispielsweise bei Wasserbauten oder auch Trink- und Brauchwassertanks, sowie auch andere Körper, wie Seile, Netze oder aus Kork und Gummi bestehende Körper sehr schnell mit einer Schleimschicht aus Mikroorganismen, die als Grundlage für den Aufwuchs weiterer Organismen dient. Dies führt zu einer Materialzerstörung sowie zur Korrosion usw. Speziell bei Schiffen führt dies zu einer Erhöhung des Reibungswiderstandes im Wasser und damit zu einer Erhöhung des Treibstoffverbrauches. Auch viele andere Gegenstände, wie Textilien oder Saatgut müssen vor einem mikrobiellem Befall geschützt werden.

Es ist daher grundsätzlich bekannt, zum Schutz vor mikrobiellem Aufwuchs Anstriche, Farben oder Lacke, Appreturen (insbesondere bei Textilien), Beizen (insbesondere bei Saatgut) usw. zu verwenden, denen ein Wirkstoff beigemischt ist, der wachstumshemmend oder tötend auf Mikroorganismen wirkt. Hierbei handelt es sich bisher um Giftstoffe, deren Abgabe an die Umwelt belastend ist, aber nicht zu verhindern ist. Aus diesem Grunde ist der Einsatz dieser Wirkstoffe vielfach beschränkt und in sehr vielen Bereichen auch verboten.

Bekannt sind speziell antimikrobielle Wirkstoffe, die aus einem anorganischen Pulver bestehen, welches mit einem antibakteriellen Metall beschichtet ist, so beispielsweise in Form eines mit Pd und mit einer Cu/zn-Legierung beschichtetes TiO2 (EP-A-0 333 118), in Form von mit Cu, Zn oder Ag beschichtetes ZnO, Talkum oder Kaolin. Hierbei ist auch bekannt (EP-A- 0 427 858), die mit einem antibakteriell wirkenden Metall oder einer antibakteriell wirkenden Metallegierung beschichteten Partikel in Mischung mit einem Polymer zu verwenden, beispielsweise ausgewählt aus der Gruppe Polyamid, Polyester, Polyolefin, Polyurethan.

JP 1-268 764 offenbart Pigmentpartikel wie ZnO, Silika oder Talkum beschichtet mit antimikrobiellen Metallen zur Einmischung in Lacken und Kunststoffen.

Bekannt ist weiterhin ein Filtermaterial(US-A-2,066,271), das zum Abtöten von Bakterien in Flüssigkeiten dient und als antibakteriellen Wirkstoff Silber enthält.

JP Z-096 508 offenbart wasserunlösliche Phosphate mit bibak- Schwermetallionen wie Ag, Cu, Zn oder zur Mn Anfnahme in Farben.

Nachteil dieser bekannten Massen ist, daß ihre antibakterielle Wirkung auf der toxischen Wirkung von Metalle bzw. Metallverbindungen beruht, also letztlich wiederum auf Giftstoffen, die eine Belastung der Umwelt darstellen.

Bekannt ist schließlich auch, Gesteinsmehl mit MnO2 zu beschichten (Gmelins Handbuch der anorganischen Chemie, "Mangan", 1973, Seite 156).

Aufgabe der Erfindung ist es, ein Verfahren aufzuzeigen, mit welchem eine Verhinderung von mikrobiellem Aufwuchs an Oberflächen von zu schützenden Körpern ohne den Einsatz von Giftstoffen möglich ist. Zur Lösung dieser Aufgabe ist ein Verfahren entsprechend dem Patentanspruch 1 ausgebildet. Eine Masse zur Obeflächenbehandlung oder -Veredelung ist erfindungsgemäß entsprechend dem Patentanspruches 6 ausgebildet.

Der das Wachstum hemmende bzw. verhindernde Wirkstoff kann auf verschiedenste Weise an der zu schützenden Oberfläche bereitgestellt werden, und zwar beispielsweise dadurch, daß dieser Wirkstoff Bestandteil einer Substanz ist, die auf die zu schützende Oberfläche aufgebracht wird, beispielsweise Bestandteil einer Farbe, eines Lackes, einer Anstrichmasse, einer Appretur (auch Textilappretur) sowie einer Beize (auch zum Beizen von Saatgut) ist. Weiterhin kann der Wirkstoff an der zu schützenden Oberfläche auch dadurch bereitgestellt werden, daß er der Masse beigemischt ist, aus der der zu schützende Körper hergestellt wird.

Lacke, Anstriche usw. denen der erfindungsgemäße Wirkstoff beigemischt ist, eignet sich insbesondere für Außenanstriche oder Beschichtungen von Schiffs- und Bootsrümpfen, als Unterwasseranstriche von Bauten sowie zur Beschichtung von Lagerbehältern. Weiterhin kann der Wirkstoff insbesondere auch in auf Holz aufgebrachten Holzschutzmitteln sowie auf Saatgut aufgebrachte Beizen verwendet werden.

Als Gesteinsmehl eignet sich bei der Erfindung vorzugsweise wenigstens ein Stoff der Gruppe
Montmorillonit
Illit
Kaolin
Basaltmehl
Diabasmehl
Phonolithmehl
Granit-Gneismehl
Granit-Pegmatitmehl.

Bei einer bevorzugten Ausführungsform wird dem mit dem Katalysator behandelten Gesteinsmehl zusätzlich eine Harzemulsion beigemischt, wobei bevorzugt wenigstens ein Harz der Gruppe
Kopalharz
Dammarharz
Schellackharz
Kolophoniumharz
Sandarakharz
Phenol-Formaldehydharz
Harnstoff-Formaldehydharz
Melanin-Formaldehydharz
Alkydharz
Polyesterharz
Epoxiharz
verwendet wird.

Mit der Erfindung ist eine wirksame Verhinderung von mikrobiellem Anwuchs an Oberflächen ohne den Einsatz von Giftstoffen erreicht.

In einer speziellen Ausführung bezieht sich die Erfindung auf eine Masse zur Oberflächenbeschichtung oder -Veredelung, die einen Anteil an dem Wirkstoff in beigemischter Form enthält, wobei der Anteil an Wirkstoff beispielsweise etwa 5 bis 25 Gewichtsprozent bezogen auf 100 Gewichtsprozent der Gesamtmasse beträgt.

Anhand der nachfolgenden Beispiele wird die Erfindung und deren Wirksamkeit noch näher erläutert.

### Beispiel 1

Bei diesem Beispiel wurde Braunstein (Manganoxid) aus Kaliumpermanganat durch Reduktion auf Montmorillonit niedergeschlagen. Das erhaltene Pulver wurde getrocknet. Mit einer Anteil von 5 Gewichtsprozent wurde dieses Pulver (Wirkstoff) einem Nähragar (1,5 % Agar, Merck nutrient broth) zugesetzt und in eine erste Gruppe von Petrischalen gegossen. In eine zweite Gruppe von Petrischalen wurde als Kontrollprobe der Agar ohne den Wirkstoff eingebracht. In beiden Fällen wurde der Agar jeweils entkeimt bzw. autoklaviert.

Nach dem Erstarren wurden sämtliche Schalen mit der Impföse (Ausstrichverfahren) mit einer Kultur von Bacillus subtilis beimpft. Es wurde bei 20°C bebrütet. Das Anwachsen wurde im Vergleich der Platten mit und ohne den Wirkstoff nach 24 Stunden, 48 Stunden und 72 Stunden beurteilt. Außer eines anfänglichen Aufwachsens konnte sich die Kultur von Bacillus subtilis in den Schalen mit dem Wirkstoff nicht entwickeln, während die Kultur in den Kontrollschalen sich voll vermehrte.

Zurückzuführen war dieses Ergebnis offenbar darauf, daß die Mikroorganismen den Kontakt mit dem im oder auf dem Gesteinsmehl verteilten Katalysator meiden.

### Beispiel II

Bei diesem Beispiel wurde ein kalthärtender Zweikomponenten-Epoxidlack mit zehn Gewichtsprozent eines auf Montmorillonit niedergeschlagenen Braunsteines (vermischt mit einer Naturharzemulsion) gemischt und auf die Glasstreifen ausgestrichen. Nach dem Erhärten wurden die Glasstreifen in einer Becherglas mit Nährbouillon gestellt. Diese Nährlösung oder Nährbouillon war vier Tage zuvor mit einer Erdesuspension infiziert worden. Für Vergleichs- oder Kontrollproben wurden Glasstreifen verwendet, die ebenfalls mit Epoxidlack, allerdings ohne den Wirkstoff beschichtet wurden. Die Gläser wurden bei 25°C inkubiert. Nach 24, 48 und 96 Stunden wurden die beschichteten Glasstreifen vergleichend beurteilt. Während sich die Kontrollproben nach 48 und 96 Stunden mit einer Schleimschicht überzogen hatten, wurde dieser Anwuchs auf den mit Epoxidlack und Wirkstoff beschichteten Glasstreifen nicht beobachtet.

## Patentansprüche

1. Verfahren zur Verhinderung von mikrobiellem Anwuchs an einer Oberfläche durch Aufbringen oder Bereitstellen einer den Anwuchs hemmenden oder verhindernden Substanz auf bzw. an der Oberfläche, **dadurch gekennzeichnet, daß** als hemmende Substanz oder Wirkstoff ein Gesteinsmehl mit einem auf diesem abgeschiedenen oder gebundenen Katalysator in Form von Braunstein (Manganoxid) verwendet wird.

2. Verfahren nach Anspruch 1, **dadurch gekennzeichnet, daß** als Gesteinsmehl wenigstens ein Stoff der Gruppe
Montmorillonit
Illit
Kaolin
Basaltmehl
Diabasmehl
Phonolithmehl
Granit-Gneismehl
Granit-Pegmatitmehl
verwendet wird.

3. Verfahren nach Anspruch 1 oder 2, **dadurch gekennzeichnet, daß** dem Gesteinsmehl und Katalysator zusätzlich eine Harzemulsion beigemischt wird.

4. Verfahren nach Anspruch 3, daß dem Gesteinsmehl und Katalysator wenigstens ein Harz der Gruppe
Kopalharz
Dammarharz
Schellackharz
Kolophoniumharz
Sandarakharz
Phenol-Formaldehydharz
Harnstoff-Formaldehydharz
Melanin-Formaldehydharz
Alkydharz
Polyesterharz
Epoxiharz
beigemischt wird.

5. Verfahren nach einem der Ansprüche 1 - 4, **dadurch gekennzeichnet**,
daß der wachstumshemmende Wirkstoff als Bestandteil eines Lackes, eines Anstrichs, einer Appretur oder einer Beize auf die zu schützende Oberfläche aufgebracht wird, oder
daß der wachstumshemmende Wirkstoff an der Oberfläche des zu schützenden Körpers dadurch bereitgestellt wird, daß dieser Wirkstoff einer zum Herstellen dieses Körpers dienenden Masse beigemischt wird.

6. Masse zur Obeflächenbehandlung oder -Veredelung, wie Lack, Farbe, Anstrichmasse oder dergleichen, mit einem der Masse beigemischten Wirkstoff zur Verhinderung des Wachstums von Mikroorganismen an Oberflächen, **dadurch gekennzeichnet, daß** der beigemischte Wirkstoff ein Gesteinsmehl mit einem auf diesem abgeschiedenen oder gebundenen Katalysator in Form von Braunstein (Manganoxid) ist

7. Masse nach Anspruch 6, **dadurch gekennzeichnet, daß** als Gesteinsmehl wenigstens ein Stoff der Gruppe
Montmorillonit
Illit
Kaolin
Basaltmehl
Diabasmehl
Phonolithmehl
Granit-Gneismehl
Granit-Pegmatitmehl
verwendet ist.

8. Masse nach Anspruch 6 oder 7, **dadurch gekennzeichnet, daß** dem Gesteinsmehl mit Katalysator eine Harzemulsion beigemischt ist.

9. Masse nach Anspruch 8, **dadurch gekennzeichnet, daß** als Harz wenigstens ein Stoff der Gruppe
Kopalharz
Dammarharz
Schellackharz
Kolophoniumharz
Sandarakharz
Phenol-Formaldehydharz
Harnstoff-Formaldehydharz
Melanin-Formaldehydharz
Alkydharz
Polyesterharz
Epoxiharz
verwendet ist.

10. Masse nach einem der Ansprüche 6-9, **dadurch gekennzeichnet**,
daß er Bestandteil eines Lackes, eines Anstrichmaterials, einer Farbe, einer Appretur, insbesondere Textilappretur oder einer Beize ist, oder
er Bestandteil einer Masse, vorzugsweise Bestandteil einer Kunststoff- oder Gummimasse zum Herstellen von Produkten ist

11. Masse nach einem der Ansprüche 6 - 10, **dadurch gekennzeichnet, daß** der Anteil an Wirkstoff etwa 5 bis 25 Gewichtsprozent bezogen auf 100 Gewichtsprozent der Gesamtmasse beträgt.

## Claims

1. Method for preventing and inhibiting microbial growth by applying or providing a substance preventing and inhibiting said microbial growth on a surface, said substance comprising at least a growth preventing and inhibiting catalyst being manganese dioxide precipitated on or bound to a mineral meal.

2. Method according to claim 1, wherein said at least on mineral meal is selected from the group of
montmorillonit
illite
kaolin
basalt meal
diabase meal
phonolite meal
granite-gneiss meal
granite pegmatite meal

3. Method according to claim 1 or 2, wherein at least one resin emulsion is admixed with the mineral meal and catalyst

4. Method according to claim 3, wherein said at least one resin admixed with the mineral meal and catalyst is selected from the group
copal resin
dammar resin
shellac resin
colophonium resin
sandarac resin
phenol-formaldehyde resin
urea-formaldehyde resin
melamin-formaldehyde resin
alkyd resin
polyester resin
epoxy resin

5. Method according to claims 1-4, wherein a varnish, a coating, a finish or a dressing comprising said substance preventing and inhibiting said microbial growth is applied to the surface to be protected
or
wherein said substance is admixed with a compound which an item to be protected is made of, so providing the inhibiting activity on the surface of the item.

6. Inhibiting substance for preventing and inhibiting microbial growth on surfaces admixed to a varnish, a coating, a finish or a dressing, said substance comprising at least a growth preventing and inhibiting catalyst being manganese dioxide precipitated on or bound to a mineral meal.

7. Substance according to claim 6, wherein said at least on mineral meal is selected from the group of
montmorillonit
illite
kaolin
basalt meal
diabase meal
phonolite meal
granite-gneiss meal
granite pegmatite meal

8. Substance according to claims 6 or 7 wherein said one resin is admixed with the mineral meal and catalyst,

9. Substance according to claim 8, wherein said at least one resin is selected from the group
copal resin
dammar resin
shellac resin
colophonium resin
sandarac resin
phenol-formaldehyde resin
urea-formaldehyde resin
melamine-formaldehyde resin
alkyd resin
polyester resin
epoxy resin

10. Substance according to claims 6-9, wherein said substance being a part of a varnish, a coating, a finish or a dressing
or
wherein said substance is a constituent of a synthetic material or rubber compound for the production of products.

11. Substance according to claims 6-10, wherein said substance is admixed to the material with about 5 to 25 percent by weight as related to a total of 100 percent of material.

## Revendications

1. Méthode pour éviter et inhiber la croissance bactérienne par l'application ou par mettre à la disposition une substance qu'éviter ou inhiber la croissance bactérienne sur une surface. La substance susdite contentant au moins un catalyseur qu'éviter e inhiber la croissance bactérienne a que e précipité sur une farine de roche.

2. Méthode suivant à la revendication 1, sélectionnant au moins une farine de roche du groupe
Montmorillonite
Illite
Caolin
Farine de Basalte
Farine de Diabase
Farine Phonolithe
Farine Granite-Gneiss
Farine Granite-Pegmatite

3. Méthode suivant à la revendication 1 ou 2, mélangent au moins une résine en émulsion avec la farine de roche e du catalyseur.

4. Méthode suivant à la revendication 3, mélangent au moins une résine susdite avec la farine de roche e du catalyseur sélecté du groupe
Résine copal
Résine dammar
Gomme lac
Colophane
Sandaraque
Produits de condensation phénol-formaldéhyde
Résine d'uree-formaldéhde
Résine de mélamine-phenol
Résine alkyd
Résine polyester
Résine époxy

5. Méthode suivant à la revendication 1-4, appliquant une peinture, un laque, une masse de peinture, un apprêt ainsi qu'un désinfectant contenant la substance susdite qu'éviter et inhiber la croissance bactérienne sur une surface à protéger.
ou
ajoutant à la masse de laquelle le corps à protéger est produit pour mettre à la disposition l'activité inhibant.

6. Substance inhibant pour éviter et inhiber la croissance bactérienne sur une surface ajoutée à une peinture, un laque, une masse de peinture, un apprêt ainsi qu'un désinfectant contenant au moins un catalyseur inhibant e évitant la croissance bactérienne qu'est dioxyde de manganèse précipité ou fixé sur une farine de roches.

7. Substance suivant à la revendication 6 sélectionnant au moins une farine de roches susdites du groupe
Montmorillonite
Illite
Caolin
Farine de Basalte
Farine de Diabase
Farine Phonolithe
Farine Granite-Gneiss
Farine Granite-Pegmatite

8. Substance suivant à la revendication 6 ou 7, ajoutant le résine susdit avec la farine de roches et de catalyseur.

9. Substance suivant à la revendication 8, sélectionnant ou moin une résine susdite du groupe
Résine copal
Résine dammar
Gomme lac
Colophane
Sandaraque
Produits de condensation phénol-formaldéhyde
Résine d'uree-formaldéhde
Résine de mélamine-phenol
Résine alkyd
Résine polyester
Résine époxy

10. Substance suivant à la revendication 6-9, étant la substance susdite est une part de une peinture, un laque, une masse de peinture, un apprêt ainsi qu'un désinfectant ou
la substance susdite étant une part de plastique ou de caoutchouc pour produire produits.

11. Substance suivant à la revendication 6-10, ajoutant susdite substance au matériau avec 5 à 25 pour-cent à poids concernant à 100 pour-cent de matériau.
